# FASCICULE DE BREVET EUROPEEN

(11) **EP 4 241 321 B1**
(45) Date de publication et mention de la délivrance du brevet: **18.12.2024**
(21) Numéro de dépôt: 21789735.4
(22) Date de dépôt: 08.10.2021
(51) Int. Cl.: H01M 4/38, H01M 10/052, H01M 10/0567, H01M 10/0569, H01M 10/42, H01M 4/40, H01M 4/505, H01M 10/0568

(54) **COMPOSITION D'ÉLECTROLYTE FLUORÉ POUR ÉLÉMENT ÉLECTROCHIMIQUE COMPORTANT UNE ANODE EN LITHIUM OU EN ALLIAGE À BASE DE LITHIUM**
FLUORIERTE ELEKTROLYTZUSAMMENSETZUNG FÜR EIN ELEKTROCHEMISCHES ELEMENT UMFASSEND EINE LITHIUM- ODER LITHIUMLEGIERUNG-ANODE
FLUORINATED ELECTROLYTE COMPOSITION FOR ELECTROCHEMICAL ELEMENT COMPRISING A LITHIUM OR LITHIUM ALLOY ANODE

(30) Priorité: 06.11.2020 FR 2011417
(43) Date de publication de la demande: 13.09.2023
(73) Titulaire: SAFT, 92300 Levallois-Perret (FR)
(72) Inventeur: DEMEAUX, Julien, 33520 BRUGES (FR); OSWALD, Marlène, 33290 BLANQUEFORT (FR)
(74) Mandataire: Hirsch & Associés
(86) Numéro de dépôt international: PCT/EP2021/077864
(87) Numéro de publication internationale: WO 2022/096220

(56) Documents cités:
- CN-A- 109 449 487
- CN-A- 109 449 511
- JP-A- 2019 133 773
- US-A1- 2015 050 561
- US-A1- 2018 069 267

## Description

### Domaine technique de l'invention

Le domaine technique de l'invention est celui des éléments électrochimiques comportant une anode en lithium ou en alliage à base de lithium.

### Contexte de l'invention

Des éléments électrochimiques rechargeables de type lithium-ion sont connus de l'état de la technique. Ils comportent au moins une cathode (électrode positive), dont la matière active est généralement un oxyde lithié d'au moins un métal de transition ou un phosphate lithié d'au moins un métal de transition, et au moins une anode (électrode négative) dont la matière active peut être à base de graphite. Ces éléments présentent une cyclabilité satisfaisante. Néanmoins, la capacité de l'anode en graphite n'est que d'environ 370 mAh/g, ce qui est modeste en comparaison avec celle d'une anode de lithium qui est d'environ 3860 mAh/g, soit plus de dix fois supérieure à celle du graphite. Le lithium étant un matériau léger, malléable et très capacitif, l'utilisation d'une anode en lithium constitue une voie possible pour augmenter la capacité des éléments électrochimiques au lithium.

Des éléments électrochimiques comportant une anode en lithium métal sont connus de l'état de la technique. Le solvant de leur électrolyte est typiquement un mélange de carbonates cycliques ou linéaires. Or, de tels éléments présentent l'inconvénient majeur d'être difficilement cyclables. En effet, des dendrites de lithium se forment progressivement à la surface de l'anode au cours du fonctionnement en cyclage de l'élément. Ces dendrites croissent au cours du cyclage et peuvent finir par percer le séparateur de l'élément et atteindre la cathode, ce qui a pour effet de créer un court-circuit entre l'anode et la cathode et d'entrainer une défaillance irréversible de l'élément. L'emploi d'un séparateur épais, plus résistant aux dendrites, ne constitue pas une solution satisfaisante au problème de la croissance dendritique car il entraine une augmentation de la résistance interne de l'élément et donc une baisse des performances en puissance de l'élément.

Les documents US 2018/069267 A1, US 2015/050561 A1 et JP 2019 133773 A décrivent des compositions d'électrolyte pour élément électrochimique au lithium comprenant un sel de lithium dissous dans un mélange de solvants composé d'un éther linéaire partiellement fluoré, de fluorocarbonate d'éthylène (FEC) et de carbonate de 2,2,2-trifluoroéthyle méthyle (F3EMC). En outre, l'emploi d'une anode comprenant du lithium métallique est également mentionné dans US 2018/069267 A1 et US 2015/050561 A1. Cependant, aucun de ces documents ne décrit l'utilisation spécifique de 1,1,1,3,3,3-hexafluoro-2-méthoxypropane (HFMP) ou de 1,1,1,3,3,3-hexafluoro-2-(fluorométhoxy)propane (HFMFP) comme éther fluoré, ni l'addition de LiPO₂F₂ au sein des compositions décrites.

Les documents CN 109 449 511 A et CN 109 449 487 A décrivent des compositions d'électrolyte pour élément électrochimique au lithium avec une anode en lithium métallique, comprenant un sel de lithium et un mélange de solvants incluant du fluorocarbonate d'éthylène (FEC) et un hydrofluoroéther, comme par exemple le 1,1,1,3,3,3-hexafluoro-2-méthoxypropane (HFMP). CN 109 449 511 A divulgue par ailleurs l'ajout de difluorophosphate de lithium (LiPO₂F₂), et éventuellement de bis(fluorosulfonyl)imidure de lithium (LiFSI), comme additifs au sein des compositions décrites. Toutefois, ces documents ne divulguent pas l'utilisation de carbonate de 2,2,2-trifluoroéthyle méthyle (F3EMC) ou d'acétate de 2,2,2-trifluoroéthyle (F3EA) comme co-solvant.

On cherche donc un élément électrochimique comportant une anode en lithium métal ou à base d'un alliage de lithium présentant une cyclabilité améliorée.

On cherche de préférence un élément électrochimique comportant une anode en lithium métal ou à base d'un alliage de lithium qui puisse être utilisé en cyclage à une température supérieure à 25°C et pouvant aller jusqu'à au moins 60°C, de préférence jusqu'à au moins 85°C. On considère que cet objectif est atteint lorsque l'élément est capable de fonctionner dans des conditions de cyclage à 60°C en effectuant au moins 25 cycles à une profondeur de décharge de 100 % sans qu'une perte de capacité de plus de 20 % de sa capacité initiale ne soit observée. On considère que cet objectif est aussi atteint lorsque l'élément est capable de fonctionner dans des conditions de cyclage à 25°C en effectuant une centaine de cycles à une profondeur de décharge de 100 % sans qu'une perte de capacité de plus de 10 % de sa capacité initiale ne soit observée.

### Résumé de l'invention

A cet effet, l'invention a pour objet un élément électrochimique comprenant :
- au moins une anode comprenant du lithium métallique ou un alliage de lithium ou au moins une anode comprenant un collecteur de courant recouvert au moins partiellement de lithium métallique déposé après au moins une charge de l'élément, l'élément ne contenant pas de lithium métallique lors de sa fabrication,
- au moins une cathode,
- une composition d'électrolyte liquide ou gélifiée comprenant :
   a) un solvant comprenant :
      i) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
      ii) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA),
   b) au moins un sel dont le cation est le cation lithium,
   c) du difluorophosphate de lithium LiPO₂F₂, et éventuellement un ou plusieurs additifs choisis dans le groupe consistant en un phosphate fluoré de lithium, un phosphate alkylé de lithium, les atomes d'hydrogène du ou des groupe(s) alkyle(s) étant éventuellement partiellement ou totalement substitué(s) par du fluor, un sulfate éventuellement partiellement ou totalement substitué par du fluor, un sulfonate éventuellement partiellement ou totalement substitué par du fluor, un sulfoxyde éventuellement partiellement ou totalement substitué par du fluor, une sulfone éventuellement partiellement ou totalement substituée par du fluor, un carbonate cyclique comportant au moins une insaturation et un mélange de ceux-ci,
      la quantité de difluorophosphate de lithium représentant de 0,05 à 5% de la masse de l'ensemble constitué par le solvant et ledit au moins un sel de lithium dissous,
      la quantité totale de difluorophosphate de lithium et du ou des additif(s) représentant au plus 10 % de la masse de l'ensemble constitué par le solvant et ledit au moins un sel de lithium dissous.

Il a été découvert de manière surprenante que l'utilisation d'un solvant tel que défini dans les variantes i) et ii) en association avec du difluorophosphate de lithium permettait d'augmenter la durée de vie d'un élément électrochimique comportant une anode en lithium ou en alliage à base de lithium, lorsque cet élément est utilisé dans des conditions de cyclage. Le cyclage peut être effectué à une température supérieure à 25°C pouvant aller jusqu'à au moins environ 85°C.

Il a de plus été observé que la composition d'électrolyte selon l'invention présentait des propriétés intéressantes d'ininflammabilité. L'élément électrochimique selon l'invention présente donc un intérêt de point de vue de la sécurité de l'utilisateur car il présente un risque plus faible d'inflammation en cas de survenue d'un court-circuit interne.

Selon un mode de réalisation, l'anode comprend du lithium métallique ou un alliage de lithium.

Selon un mode de réalisation, l'additif est choisi dans le groupe consistant en le sulfate d'éthylène ESA, le carbonate de vinyle VC et un mélange de ceux-ci.

Selon un mode de réalisation, lequel le pourcentage massique de LiPO₂F₂ va de 0,05 à 2 %, de préférence de 0,1 à 1 % de la masse de l'ensemble constitué par le solvant et ledit au moins un sel.

Selon un mode de réalisation, le sel de lithium est l'hexafluorophosphate de lithium LiPF₆.

Selon un mode de réalisation, le solvant est exempt de carbonate non fluoré.

Selon un mode de réalisation, la cathode comprend une matière active cathodique fonctionnant à un potentiel supérieur à 4,5 V par rapport au couple Li⁺/Li.

Selon un mode de réalisation, la matière active cathodique a pour formule LiₓMn_{2-y-z}M'_{y}M"_{z}O₄ (LMO), où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre, et 1≤x≤1,4 ; 0≤y≤0,6 ; 0≤z≤0,2.

Selon un mode de réalisation, la matière active cathodique présente une structure cristalline désordonnée.

Selon un mode de réalisation, la cathode comprend un mélange de deux matières actives cathodiques, la première présentant une structure cristalline désordonnée, la seconde présentant une structure cristalline ordonnée.

Selon un mode de réalisation, la composition d'électrolyte comprend :
- un solvant comprenant un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA) ;
- de l'hexafluorophosphate de lithium LiPF₆ comme sel ;
- du difluorophosphate de lithium LiPO₂F₂ comme additif.

Selon un mode de réalisation, le 1,1,1,3,3,3-hexafluoro-2-méthoxypropane (HFMP) et/ou le 1,1,1,3,3,3-hexafluoro-2-(fluorométhoxy)propane (HFMFP) représente de 10 à 50 % du volume de solvant ou de 15 à 40 % du volume de solvant ou de 20 à 30 % du volume de solvant.

Selon un mode de réalisation, le 1, 1, 1,3,3,3-hexafluoro-2-méthoxypropane (HFMP) et/ou le 1, 1, 1,3,3,3-hexafluoro-2-(fluorométhoxy)propane (HFMFP) représente de 20 à 30 % du volume de solvant, le monofluorocarbonate d'éthylène (F1EC) représente de 15 à 40 % du volume de solvant et l'acétate de 2,2,2-trifluoroéthyle (F3EA) représente de 30 à 50 % du volume de solvant.

### Brève description des dessins

[Fig. 1] représente la variation de la tension des éléments de type A, B et C au cours du premier cycle de formation à 60°C au régime de charge et de décharge de C/20, C étant la capacité nominale des éléments. Les limites de potentiel sont 3,3 et 4,9 V
[Fig. 2a] représente la variation du potentiel entre les deux électrodes de lithium des éléments de type D au cours d'un cyclage à une température de 60°C. Les cycles de charge et décharge ont été réalisés aux régimes de 0,1 mA/cm², 0,2 mA/cm², 0,4 mA/cm² et 1,0 mA/cm².
[Fig. 2b] représente la variation du potentiel entre les deux électrodes de lithium des éléments de type E au cours d'un cyclage effectué dans les mêmes conditions que celles de la figure 2a.
[Fig. 3] représente la variation de la capacité massique des éléments de type A, B et C au cours d'un cyclage à une température de 60°C au régime de charge et de décharge de C/10.
[Fig. 4] montre une série de photographies prises sur des bandelettes de papier céramique imprégnées des électrolytes des éléments de type D (photographies du haut) et de type E (photographies du bas).
[Fig. 5a] représente la variation de la tension des éléments de type F au cours des deux premiers cycles de formation à 25°C. Le premier cycle est réalisé au régime de C/10. Le second cycle est réalisé au régime de C/5.
[Fig. 5b] représente la variation de la tension des éléments de type G au cours des deux premiers cycles de formation effectués dans les mêmes conditions que celles de la figure 5a.
[Fig. 5c] représente la variation de la tension des éléments de type H au cours des deux premiers cycles de formation effectués dans les mêmes conditions que celles de la figure 5a.
[Fig. 6a] représente la variation de la capacité massique des éléments de type F, G et H au cours d'un cyclage à une température de 25°C au régime de charge et de décharge de C/5.
[Fig. 6b] représente la variation du pourcentage de rétention de la capacité des éléments de type F, G et H au cours du cyclage effectué dans les conditions de la figure 6a.
[Fig. 7a] représente la variation du potentiel entre les deux électrodes en lithium de l'élément de type I au cours d'un cyclage à une température de 60°C. Les cycles de charge et décharge ont été réalisés aux régimes de 0,1 mA/cm², 0,2 mA/cm², 0,4 mA/cm² et 1,0 mA/cm².
[Fig. 7b] représente la variation du potentiel entre les deux électrodes de lithium de l'élément de type J au cours d'un cyclage effectué dans les mêmes conditions que celles de la figure 7a.
[Fig. 7c] représente la variation du potentiel entre les deux électrodes de lithium de l'élément de type K au cours d'un cyclage effectué dans les mêmes conditions que celles de la figure 7a.

### Description des modes de réalisation de l'invention

La composition d'électrolyte selon l'invention ainsi que les différents constituants d'un élément électrochimique comprenant la composition d'électrolyte selon l'invention vont être décrits dans ce qui suit.

### Composition d'électrolyte :

La composition d'électrolyte comprend un solvant comprenant :
soit un mélange i) de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
soit un mélange ii) de1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA).

Les formules chimiques des différents composés chimiques du solvant sont données ci-après.
- HFMP : 1,1,1,3,3,3-hexafluoro-2-méthoxypropane, encore désigné dans ce qui suit par le terme hexafluorométhoxypropane. 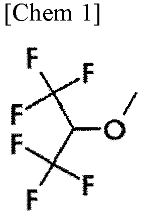
- HFMFP : 1,1,1,3,3,3-hexafluoro-2-(fluorométhoxy)propane, encore désigné dans ce qui suit par le terme hexafluoro(fluorométhoxy)propane 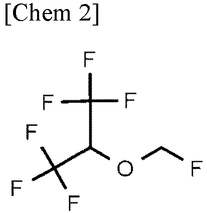
- F1EC : monofluorocarbonate d'éthylène ou 4-fluoro-1,3-dioxolan-2-one 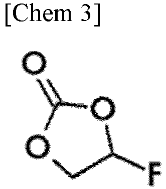
- F3EMC : carbonate de 2,2,2-trifluoroéthyle méthyle, encore désigné dans ce qui suit par le terme carbonate de trifluoroéthyle méthyle 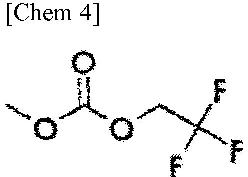
- F3EA : acétate de 2,2,2-trifluoroéthyle, encore désigné dans ce qui suit par le terme acétate de trifluoroéthyle

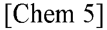

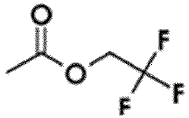

L'utilisation d'hexafluorométhoxypropane (HFMP) et/ou d'hexafluoro(fluoro-méthoxy) propane (HFMFP) en association avec :
- soit un mélange i) de monofluorocarbonate d'éthylène (F1EC) et de carbonate de trifluoroéthyle méthyle (F3EMC),
- soit un mélange ii) de monofluorocarbonate d'éthylène (F1EC) et d'acétate de trifluoroéthyle (F3EA),
permet d'améliorer la durée de vie de l'élément.

L'hexafluorométhoxypropane (HFMP) et/ou l'hexafluoro(fluorométhoxy)propane (HFMFP) peut représenter de 10 à 50 % du volume de solvant ou de 15 à 40 % du volume de solvant ou de 20 à 30 % du volume de solvant.

Dans le cas du mélange i), la somme des pourcentages volumiques de l'hexafluorométhoxypropane (HFMP) et/ou de l'hexafluoro(fluorométhoxy)propane (HFMFP) et du carbonate de trifluoroéthyle méthyle (F3EMC) exprimés par rapport au volume de solvant peut être supérieure ou égale à 50 % ou supérieure ou égale à 60 % ou supérieure ou égale à 70 %. L'hexafluorométhoxypropane (HFMP) et/ou de l'hexafluoro(fluorométhoxy)propane (HFMFP) peut représenter de 20 à 30 % du volume de solvant. Le monofluorocarbonate d'éthylène (F1EC) peut représenter de 15 à 40 % du volume de solvant. Le carbonate de trifluoroéthyle méthyle (F3EMC) peut représenter de 30 à 50 % du volume de solvant.

Dans le cas du mélange ii), la somme des pourcentages volumiques de l'hexafluorométhoxypropane (HFMP) et/ou de l'hexafluoro(fluorométhoxy)propane (HFMFP) et de l'acétate de trifluoroéthyle (F3EA) exprimés par rapport au volume de solvant peut être supérieure ou égale à 50 % ou supérieure ou égale à 60 % ou supérieure ou égale à 70 %. L'hexafluorométhoxypropane (HFMP) et/ou l'hexafluoro(fluorométhoxy)propane (HFMFP) peut représenter de 20 à 30 % du volume de solvant. Le monofluorocarbonate d'éthylène (F1EC) peut représenter de 15 à 40 % du volume de solvant. L'acétate de trifluoroéthyle (F3EA) peut représenter de 30 à 50 % du volume de solvant.

Dans un mode de réalisation préféré, l'hexafluorométhoxypropane (HFMP) et/ou l'hexafluoro(fluorométhoxy)propane (HFMFP) est associé au monofluorocarbonate d'éthylène (F1EC) et à l'acétate de trifluoroéthyle (F3EA) (mélange ii). Il a en effet été découvert que l'acétate de trifluoroéthyle permettait d'éviter la décomposition de l'électrolyte en produit gazeux et donc l'augmentation de la pression interne de l'élément. Sans vouloir être lié par la théorie, la Demanderesse est d'avis que la présence d'acétate de trifluoroéthyle permettrait de diminuer le nombre de molécules de monofluorocarbonate d'éthylène (F1EC) qui solvatent un ion lithium. En diminuant le nombre de molécules de monofluorocarbonate d'éthylène F1EC autour d'un ion lithium, on diminuerait la quantité de dioxyde de carbone générée et on réduirait ainsi le risque d'une ouverture du conteneur de l'élément.

Le solvant peut être constitué uniquement des composés chimiques du mélange i) ou être constitué uniquement des composés chimiques du mélange ii).

Le solvant peut ne contenir :
- aucun autre carbonate cyclique que le monofluorocarbonate d'éthylène (F 1EC), ou
- aucun autre carbonate linéaire que le carbonate de trifluoroéthyle méthyle (F3EMC), ou
- aucun autre ester que l'acétate de trifluoroéthyle (F3EA), ou
- aucun autre éther que l'hexafluorométhoxypropane (HFMP) et/ou l'hexafluoro(fluorométhoxy) propane (HFMFP).

Selon un mode de réalisation, le solvant est exempt de carbonates non fluorés.

Selon un mode de réalisation, le solvant est exempt de composés chimiques non fluorés.

La composition d'électrolyte comprend au moins un sel de lithium. Le sel de lithium peut être choisi parmi l'hexafluorophosphate de lithium LiPF₆, le tétrafluoroborate de lithium LiBF₄, le perchlorate de lithium LiClO₄, l'hexafluoroarsénate de lithium LiAsF₆, l'hexafluoroantimonate de lithium LiSbF₆, le trifluorométhanesulfonate de lithium LiCF₃SO₃, le bis(fluorosulfonyl)imide de lithium Li(FSO₂)₂N (LiFSI), le trifluorométhanesulfonimide de lithium LiN(CF₃SO₂)₂ (LiTFSI), le trifluorométhanesulfoneméthide de lithium LiC(CF₃SO₂)₃ (LiTFSM), le bisperfluoroéthylsulfonimide de lithium LiN(C₂F₅SO₂)₂ (LiBETI), le 4,5-dicyano-2-(trifluoromethyl) imidazolide de lithium (LiTDI), le bis(oxalatoborate) de lithium (LiBOB), le difluoro(oxalato)borate de lithium (LiDFOB), le tris(pentafluoroethyl)trifluorophosphate de lithium LiPF₃(CF₂CF₃)₃ (LiFAP) et les mélanges de ceux-ci. On choisira de préférence l'hexafluorophosphate de lithium LiPF₆.

La concentration dudit au moins un sel dans l'électrolyte varie de 0,7 à 4 mol.L⁻¹, ou de 1 à 2 mol.L⁻¹, ou de 1,2 à 2 mol.L⁻¹.

La Demanderesse a observé que l'ajout de difluorophosphate de lithium LiPO₂F₂ de formule : 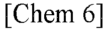 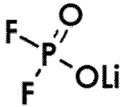 aux mélanges i) et ii) permettait, en plus de prolonger la durée de vie de l'élément, d'éviter l'augmentation de la pression interne de l'élément, et donc le risque d'une ouverture du conteneur.

Le pourcentage massique de difluorophosphate de lithium LiPO₂F₂ va de 0,05 à 5 %, de préférence de 0,05 à 2 %, de préférence encore de 0,1 à 1 % de la masse de l'ensemble constitué par le solvant et ledit au moins un sel.

De manière optionnelle, LiPO₂F₂ est associé à un ou plusieurs additifs choisis dans le groupe consistant en un phosphate fluoré de lithium, un phosphate alkylé de lithium, les atomes d'hydrogène du ou des groupe(s) alkyle(s) étant éventuellement partiellement ou totalement substitué(s) par du fluor, un sulfate éventuellement partiellement ou totalement substitué par du fluor, un sulfonate éventuellement partiellement ou totalement substitué par du fluor, un sulfoxyde éventuellement partiellement ou totalement substitué par du fluor, une sulfone éventuellement partiellement ou totalement substituée par du fluor, un carbonate cyclique comportant au moins une insaturation et un mélange de ceux-ci.

LiPO₂F₂ peut être par exemple associé à du sulfate d'éthylène ESA dont la formule est :

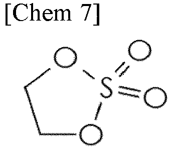

La quantité totale de difluorophosphate de lithium et du ou des additifs représente au plus 10 % de la masse de l'ensemble constitué par le solvant et ledit au moins un sel de lithium dissous.

Sans vouloir être lié par la théorie, la Demanderesse est d'avis que la présence de difluorophosphate de lithium LiPO₂F₂ permettrait de limiter la réactivité du monofluorocarbonate d'éthylène (F1EC) contenu dans les mélanges i) et ii) vis-à-vis de l'anode. En limitant la réactivité du monofluorocarbonate d'éthylène (F1EC) vis-à-vis de l'anode, on limiterait la croissance de la couche de passivation SEI à la surface de l'anode. Une couche de passivation trop épaisse entraine une élévation importante de la température de l'élément lors de sa première charge (encore appelée « formation »). Ce phénomène est néfaste à la durée de vie de l'élément.

Bien que la présence d'acétate de trifluoroéthyle (F3EA) ou de difluorophosphate de lithium LiPO₂F₂ permette dans les deux cas de réduire l'échauffement de l'élément, il semble que les mécanismes d'action de ces deux composés chimiques soient différents. L'acétate de trifluoroéthyle (F3EA) agirait en réduisant le nombre de solvatation du monofluorocarbonate d'éthylène (F1EC) autour d'un ion lithium. Le difluorophosphate de lithium LiPO₂F₂ agirait plutôt en évitant que les molécules de monofluorocarbonate d'éthylène F1EC forment une couche de passivation (SEI) à l'anode trop épaisse.

La Demanderesse est d'avis qu'en agissant sur le nombre de solvatation de F1EC et/ou sur l'épaisseur de la couche de passivation, il est possible d'obtenir à la fois une bonne durée de vie de l'élément en cyclage et une faible émission de gaz dans le conteneur de l'élément.

Une composition d'électrolyte particulièrement préférée comprend :
a) un solvant comprenant ou consistant en un mélange d'hexafluorométhoxypropane (HFMP) et/ou d'hexafluoro(fluorométhoxy)propane (HFMFP), de monofluorocarbonate d'éthylène (F1EC) et d'acétate de trifluoroéthyle (F3EA),
b) LiPF₆ en une concentration allant de 0,7 à 2 mol.L⁻¹, de préférence entre 1 et 1,5 mol.L⁻¹ ;
c) LiPO₂F₂ en un pourcentage massique allant de 0,05 à 5 %, de préférence de 0,05 à 2 %, de préférence encore de 0,1 à 1 % de la masse de l'ensemble constitué par le solvant et LiPF₆.

Cette composition combine une action sur le nombre de solvatation de F1EC par la présence de F3EA et une action sur l'épaisseur de la couche de passivation par la présence de LiPO₂F₂.

Dans un mode de réalisation, la composition d'électrolyte contient de l'hexafluorophosphate de lithium (LiPF₆), du bis(fluorosulfonyl)imide de lithium Li(FSO₂)₂N (LiFSI) et du difluorophosphate de lithium (LiPO₂F₂).

L'invention inclut aussi le cas d'électrolytes gélifiés. Pour fabriquer l'électrolyte gélifié, on incorpore le polymère gélifiant à la composition d'électrolyte. Le mélange est agité pendant plusieurs minutes. Il peut être chauffé à une température ne dépassant pas 50°C afin d'accélérer le gonflement du polymère. Le polymère gélifiant peut être choisi parmi le polyfluorure de vinylidène (PVDF), le poly(fluorure de vinylidène-co-hexafluoropropylène) (PVDF-HFP), un poly(oxyde d'éthylène) ou un polyacrylate. PVDF et PVDF-HFP sont les polymères gélifiants préférés.

### Matière active cathodique :

La matière active cathodique n'est pas particulièrement limitée. Elle est de préférence une matière active fonctionnant à un potentiel supérieur à 4,5 V par rapport au couple Li⁺/Li. Cette caractéristique est une caractéristique intrinsèque de la matière active. Elle peut être aisément mesurée par des essais de routine pour un homme du métier. Pour ce faire, l'homme du métier réalise un élément électrochimique comprenant une première électrode constituée de lithium métallique et une seconde électrode comprenant la matière active dont on veut déterminer le potentiel par rapport au couple électrochimique Li⁺/Li. Ces deux électrodes sont séparées par une membrane microporeuse en polyoléfine, typiquement en polyéthylène, et/ou en polypropylène imprégnée d'électrolyte, usuellement un mélange de carbonate d'éthylène et de carbonate de diméthyle, dans lequel est dissous du LiPF₆ à une concentration de 1 mol.L⁻¹. La mesure de potentiel est réalisée à 25°C. Des matières actives présentant un potentiel de fonctionnement supérieur à 4,5 V par rapport au potentiel du couple électrochimique Li⁺/Li sont également décrites dans la littérature.

La matière active peut être choisie dans le groupe consistant en :
- un composé **i)** de formule LiₓMn_{1-y-z}M'_{y}M"_{z}PO₄ (LMP), où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec 0,8≤x≤1,2 ; 0≤y≤0,6 ; 0≤z≤0,2 ;
- un composé **ii)** de formule LiₓM_{2-x-y-z-w}M'_{y}M"_{z}M‴_{w}O₂ (LMO2), où M, M', M" et M'" sont choisis dans le groupe consistant en B, Mg, Al, Si, Ca, Ti, V, Cr, Mn, Fe, Co, Ni, Cu, Zn, Y, Zr, Nb, W, Mo, Sr, Ce, Ga et Ta, à la condition que M ou M' ou M" ou M‴ soit choisi parmi Mn, Co, Ni, or Fe ; M, M', M" et M'" étant différents les uns des autres, avec 0,8≤x≤1,4 ; 0≤y≤0,5 ; 0≤z≤0,5; 0≤w≤0,2 et x+y+z+w<2,2 ;
- un composé **iii)** de formule LiₓMn_{2-y-z}M'_{y}M"_{z}O₄ (LMO), où M' et M" sont choisis dans le groupe consistant en B, Mg, Al, Si, Ca, Ti, V, Cr, Fe, Co, Ni, Cu, Zn, Y, Zr, Nb et Mo ;M' et M" étant différents l'un de l'autre, et 1≤x≤1,4 ; 0≤y≤0,6 ; 0≤z≤0,2 ;
- un composé **iv)** de formule LiₓFe_{1-y}M_{y}PO₄, où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6 ;
- un composé **v)** de formule xLi₂MnO₃ ; (1-x)LiMOz où M est choisi parmi Ni, Co et Mn et x≤1 .
- un composé **vi)** qui est un fluorophosphate de lithium et de vanadium de formule Li₁₊ₓVPO₄F où 0≤x≤0,15, ou un de ses dérivés de formule Li₁₊ₓV_{1-y}M_{y}PO₄F_{z} où 0≤x≤0,15 ; 0<y≤0,5 ; 0,8≤z≤1,2 et M est choisi dans le groupe consistant en Ti, Al, Y, Cr, Cu, Mg, Mn, Fe, Co, Ni, et Zr. Des exemples de dérivés préférés sont LiYₓV₁₋ₓPO₄F (0<x≤0,5), LiCrₓV₁₋ₓPO₄F (0<x≤0,5), Li-CoₓV₁₋ₓPO₄F (0<x≤0,5), LiMnₓV₁₋ₓPO₄F (0<x≤0,5), LiTiₓV₁₋ₓPO₄F (0<x≤0,5), LiFeₓV₁₋ₓPO₄F (0<x≤0,5) ;
   ou un mélange des composés **i)** à **vi).**

Un exemple de composé **i)** est LiMn_{1-y}Fe_{y}PO₄. Un exemple préféré est LiMnPO₄.

Le composé **ii)** peut avoir pour formule LiₓM_{2-x-y-z-w}M'_{y}M"_{z}M‴_{w}O₂, où 1 ≤ x ≤ 1,15 ; M désigne Ni ; M' désigne Mn ; M" désigne Co et M'" est choisi dans le groupe consistant en B, Mg, Al, Si, Ca, Ti, V, Cr, Fe, Cu, Zn, Y, Zr, Nb, Mo, Sr, Ce, Ga et Ta ou un mélange de ceux-ci ; 2-x-y-z-w>0 ; y>0 ; z>0 ; w≥0.

Le composé **ii)** peut avoir pour formule LiNi_{1/3}Mn_{1/3}Co_{1/3}O₂.

Le composé **ii)** peut aussi avoir pour formule LiₓM_{2-x-y-z-w}M'_{y}M"_{z}M‴_{w}O₂, où 1 ≤ x ≤ 1,15 ; M désigne Ni ; M' désigne Co ; M" désigne Al et M'" est choisi dans le groupe consistant en B, Mg, Si, Ca, Ti, V, Cr, Fe, Cu, Zn, Y, Zr, Nb, Mo, Sr, Ce, Ga et Ta ou un mélange de ceux-ci ; 2-x-y-z-w>0 ; y>0 ; z>0 ; w≥0. De préférence, x=1 ; 0,6≤2-x-y-z≤0,85 ; 0,10≤y≤0,25 ; 0,05≤z≤0,15 et w=0.

Le composé **ii)** peut aussi être choisi parmi LiNiO₂, LiCoO₂, LiMnO₂, Ni, Co et Mn pouvant être substitués par l'un ou par plusieurs des éléments choisis dans le groupe comprenant Mg, Mn (sauf pour LiMnO₂), Al, B, Ti, V, Si, Cr, Fe, Cu, Zn, Zr.

Un exemple de composé **iii)** est LiMn₂O₄. Un autre exemple de composé a pour formule LiₓMn_{2-y-z}Ni_{y}M"_{z}O₄ (LMO), où M" est choisi dans le groupe consistant en B, Mg, Al, Si, Ca, Ti, V, Cr, Fe, Co, Cu, Zn, Y, Zr, Nb et Mo; et 1≤x≤1,4 ; 0≤y≤0,6 ; 0≤z≤0,2. Un exemple de ce composé est LiMn_{2-y}Ni_{y}O₄ où 0≤y≤0,6, tel que LiMn_{1,5}Ni_{0,5}O₄.

Un exemple de composé **iv)** est LiFePO₄.

Un exemple de composé **v)** est Li₂MnO₃.

Les composés de formule LiₓMn_{2-y-z}M'_{y}M"_{z}O₄ (LMO) décrits ci-dessus peuvent présenter une structure cristalline ordonnée ou désordonnée. La structure désordonnée peut être obtenue en soumettant le composé à un recuit. L'exposition à la chaleur permet une réorganisation de l'orientation des plans cristallins. Le recuit est de préférence effectué à une température supérieure ou égale à 700°C. Le choix de la température et la durée du recuit sont à la portée de l'homme du métier. L'obtention de la structure cristalline désordonnée peut être vérifiée à l'aide de la spectroscopie Raman ou à l'aide de la spectroscopie infra-rouge ou en traçant le spectre de diffraction des rayons X du composé. La demanderesse a observé qu'une structure cristalline ordonnée favorisait une bonne durée de vie de l'élément mais conférait une puissance modeste à l'élément. Elle a observé inversement qu'une structure cristalline désordonnée favorisait une bonne puissance de l'élément mais conférait une durée de vie modeste. L'utilisation d'une matière active présentant une structure désordonnée convient donc bien à la fabrication d'éléments typés « puissance », c'est-à-dire pour lesquels on privilégie les performances en puissance sans nécessairement se fixer de critère quant à la quantité d'énergie minimale emmagasinée par l'élément. Un compromis en termes de puissance et de durée de vie peut être obtenu en utilisant un mélange d'une première matière active présentant une structure cristalline ordonnée avec une seconde matière active présentant une structure cristalline désordonnée. La seconde matière active et la première matière active peuvent être de formules chimiques identiques ou différentes.

La matière active cathodique peut être recouverte au moins partiellement par une couche de carbone.

### Liant de la cathode :

La matière active cathodique est généralement mélangée à un ou plusieurs liant(s), dont la fonction est de lier les particules de matière active entre elles ainsi que de les lier au collecteur de courant sur lequel elles sont déposées.

Le liant peut être choisi parmi la carboxyméthylcellulose (CMC), un copolymère de butadiène - styrène (SBR), le polytétrafluoroéthylène (PTFE), le polyamideimide (PAI), le polyimide (PI), le caoutchouc styrène-butadiène (SBR), l'alcool polyvinylique, le polyfluorure de vinylidène (PVDF), le poly(fluorure de vinylidère-co-hexafluoropropylène) (PVDF-HFP), le caoutchouc butadiène-acrylonitrile (NBR) et le caoutchouc butadiène-acrylonitrile hydrogéné (HNBR) et un mélange de ceux-ci.

### Collecteur de courant de la cathode :

Le collecteur de courant de la cathode se présente sous la forme d'un feuillard métallique plein ou perforé. Le feuillard peut être fabriqué à partir de différents matériaux. On peut citer le cuivre ou les alliages de cuivre, l'aluminium ou les alliages d'aluminium, le nickel ou les alliages de nickel, et l'acier inoxydable.

Le collecteur de courant de la cathode est généralement un feuillard en aluminium ou un alliage comprenant majoritairement de l'aluminium. Le feuillard de la cathode a une épaisseur généralement comprise entre 6 et 30 µm.

Selon un mode de réalisation préféré, le collecteur en aluminium de la cathode est recouvert d'un revêtement conducteur, comme par exemple le noir de carbone, le graphite.

### Fabrication de la cathode :

On mélange la matière active cathodique avec un ou plusieurs liants cités ci-avant et éventuellement un composé bon conducteur électronique, tel que le noir de carbone. On obtient une encre que l'on dépose sur l'une ou les deux faces du collecteur de courant. Le collecteur de courant enduit d'encre est laminé afin d'ajuster son épaisseur. Une cathode est ainsi obtenue.

La composition de l'encre déposée sur la cathode peut être la suivante :
- de 75 à 96 % de matière active cathodique, de préférence de 80 à 90 % ;
- de 2 à 15 % de liant(s), de préférence 10 % ;
- de 2 à 10 % de composé conducteur électronique, de préférence 10 %.

### Fabrication de l'anode :

La matière active anodique est du lithium métal ou un alliage à base de lithium de formule LiM, où M est choisi dans le groupe consistant en Mg, Al, Si, B, Ge, Ga ou un mélange de ceux-ci. De préférence, M est Al. La matière active anodique peut se présenter sous la forme d'une bande de lithium ou d'une bande d'un alliage de lithium sur laquelle est fixé un collecteur de courant. Le collecteur de courant peut être plein ou avoir une structure ajourée. Le collecteur de courant peut être choisi dans le groupe comprenant un métal perforé, un métal, une grille, un tissu métallique et est constitué d'un matériau choisi parmi le cuivre, l'acier inoxydable et le nickel, de préférence le cuivre. La matière active peut être fixée au collecteur de courant par un procédé de laminage.

Au lieu d'être apporté dans l'élément sous la forme d'une bande de lithium ou d'une bande d'un alliage de lithium au cours de la fabrication de l'élément, le lithium métal peut aussi se former sur un collecteur de courant pendant la charge de cet élément, généralement dès la première charge de l'élément. Le collecteur de courant est constitué d'un métal autre que le lithium, par exemple le cuivre. Au cours de la charge de l'élément, la cathode génère des ions lithium qui se réduisent à l'anode et s'y déposent. Le lithium métal déposé à l'anode est consommé au cours de la décharge suivante. L'invention s'applique donc au domaine des éléments dits « sans lithium » (ou « lithium free »). Le terme « lithium free » définit le fait que l'élément ne contient pas de lithium métal lors de sa fabrication, mais que du lithium est déposé sous forme métallique puis consommé de manière contrôlée et réversible in situ au cours du fonctionnement de l'élément.

### Séparateur :

Le matériau du séparateur peut être choisi parmi les matériaux suivants : une polyoléfine, par exemple le polypropylène, le polyéthylène, un polyester, des fibres de verre liées entre elles par un polymère, le polyimide, le polyamide, le polyaramide, le polyamideimide et la cellulose. Le polyester peut être choisi parmi le téréphtalate de polyéthylène (PET) et le téréphtalate de polybutylène (PBT). Avantageusement, le polyester ou le polypropylène ou le polyéthylène contient ou est revêtu d'un matériau choisi dans le groupe consistant en un oxyde métallique, un carbure, un nitrure, un borure, un siliciure et un sulfure. Ce matériau peut être SiO₂ ou Al₂O₃.

### Préparation de l'élément :

On forme un faisceau électrochimique en intercalant un séparateur entre au moins une cathode et au moins une anode. On insère le faisceau électrochimique dans le conteneur de l'élément. Le conteneur de l'élément peut être de format parallélépipédique, cylindrique ou pochette (« pouch » en anglais).

Le faisceau électrochimique peut être formé par l'empilement d'électrodes et de séparateurs et se présenter sous la forme d'un parallélépipède. Le format du conteneur est dans ce cas parallélépipédique (prismatique).

Le faisceau électrochimique peut également être constitué d'un enroulement en spirale d'au moins une cathode et au moins une anode séparées par un séparateur. Le format du conteneur est dans ce cas cylindrique.

Le conteneur est scellé à l'aide d'un couvercle. Le couvercle est pourvu d'une ouverture pour l'introduction de l'électrolyte lorsqu'il est liquide. La composition d'électrolyte liquide est introduite dans le conteneur de l'élément grâce à un vide créé dans le conteneur par un opérateur.

Un élément de type pochette est obtenu en formant un jeu de plaques obtenu par empilement d'au moins une cathode et d'au moins une anode séparées par un séparateur. Le jeu de plaques est logé dans une enveloppe (ou pochette) souple constituée après soudure des bords de deux films multi-couches, chaque film multi-couches comprenant une couche métallique, généralement en aluminium, prise en sandwich entre deux couches de matière plastique. L'enveloppe ainsi constituée est remplie d'électrolyte puis fermée de manière étanche.

### EXEMPLES

Différents types d'éléments électrochimiques référencés A à K ont été fabriqués. Les éléments des types A-C et F-H comprennent une anode constituée de lithium métal Li⁽⁰⁾ et une cathode dont la matière active a pour formule LiNi_{0,5}Mn_{1,5}O₄. Les éléments des types D-E et I-J-K sont des éléments symétriques comportant une anode et une cathode constituée de lithium métal. La composition des électrolytes utilisés est indiquée dans le Tableau 1 ci-dessous. Le séparateur est un séparateur tricouche PP/PE/PP (PP : polypropylène ; PE : polyéthylène).

**[Table 1]**

| Type d' élément | Matière active cathodique | Matière active anodique | Solvant * * | LiPF₆ (mol.L⁻¹) | LiPO₂F₂ (%)*** | VC (%)*** |
|---|---|---|---|---|---|---|
| A* | mélange de LiNi_{0,5}Mn_{1,5}O₄ ordonné et LiNi_{0,5}Mn_{1,5}O₄ désordonné | Li⁽⁰⁾ | EC : PC : EMC : DMC 10 : 20 : 25 : 45 | 1,0 | - | 3 |
| B* | | | F1EC : F3EA : HFMP 30 : 45 : 25 | 1,2 | - | - |
| C | | | F1EC : F3EA : HFMP 30 : 45 : 25 | 1,2 | 0,1 | - |
| D* | Li⁽⁰⁾ | Li⁽⁰⁾ | EC : EMC 30 : 70 | 1,0 | - | - |
| E* | | | F1EC : F3EA : HFMP 30 : 45 : 25 | 1,2 | - | - |
| F* | LiNi_{0,5}Mn_{1,5}O₄ désordonné | Li⁽⁰⁾ | EC : PC : EMC : DMC 10 : 20 : 25 : 45 | 1,2 | - | 3 |
| G | | | F1EC : F3EA : HFMP 30 : 45 : 25 | 1,2 | 0,3 | - |
| H | | | F1EC : F3EA : HFMFP 30 : 45 : 25 | 1,2 | 0,3 | - |
| I* | Li⁽⁰⁾ | Li⁽⁰⁾ | EC : PC : EMC : DMC 10 : 20 : 25 : 45 | 1,0 | - | 3 |
| J | | | F1EC : F3EA : HFMP 30 : 45 : 25 | 1,2 | 0,3 | - |
| K | | | F1EC : F3EA : HFMFP 30 : 45 : 25 | 1,2 | 0,3 | - |

| | | | | | | |
|---|---|---|---|---|---|---|
| * Elément ne faisant pas partie de l'invention ** Ratios volumiques *** Pourcentage en masse exprimé par rapport à la somme de la masse du solvant et de la masse de LiPF₆ EC : carbonate d'éthylène PC : carbonate de propylène EMC : carbonate de méthyle éthyle DMC : carbonate de diméthyle | | | | | | |

### a) Effet du remplacement des carbonates non fluorés de l'électrolyte par un mélange ternaire fluoré selon l'invention sur la durée de vie de l'élément :

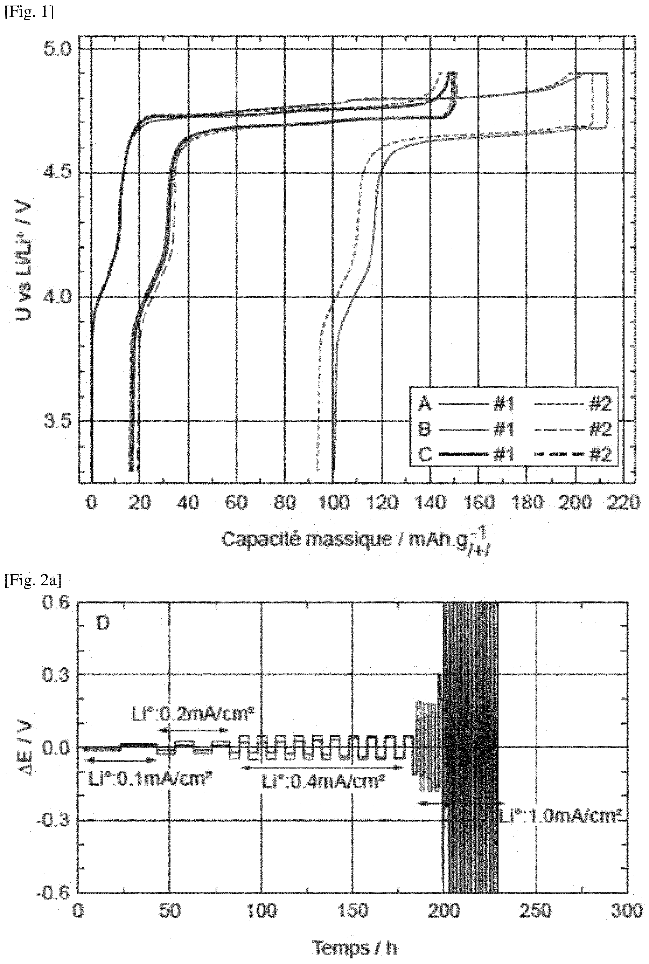

a-1) Les éléments de type A, B et C ont subi un premier cycle de « formation » à 60°C. La charge consiste en une première étape de charge à courant constant de C/20 jusqu'à une tension de 4,9 V suivie d'une seconde étape de charge à tension constante de 4,9 V et arrêt de la charge soit lorsque le courant de charge devient inférieur à C/200, soit lorsque la durée nécessaire pour que le courant de charge devienne inférieur à C/200 dépasse 1 h. La décharge est effectuée au régime de C/20 jusqu'à une tension de coupure de 3,3 V La tension maximale élevée de 4,9 V ainsi que la température élevée de 60°C placent les éléments dans des conditions sévères de cyclage. De plus, les durées élevées de charge et de décharge exposent l'électrolyte à des potentiels élevés (4,7 V) de façon prolongée. Ces conditions permettent de simuler un vieillissement accéléré des électrodes. La figure 1 représente la variation de la tension des éléments A, B et C au cours du premier cycle de formation. Deux éléments par type A, B et C ont été testés.

Les éléments de type A comprenant un mélange de carbonates non-fluorés servent de référence. En comparant les courbes de tension des éléments de type B et C avec celles des éléments de type A, on constate les améliorations suivantes :
- la capacité massique irréversible est réduite. Elle passe de 95 mAh/g à 18 mAh/g soit une réduction de 81 % ;
- la polarisation de l'élément, c'est-à-dire la différence entre la tension en charge et la tension en décharge de l'élément pour un état de charge donné, est réduite ;
- la durée au cours de laquelle la tension de l'élément est maintenue à 4,9 V (durée de « floating ») est réduite. Il en résulte une plus faible oxydation de l'électrolyte.

Ces différentes améliorations peuvent être attribuées au remplacement des carbonates non fluorés par le mélange ternaire fluoré F1EC : F3EA : HFMP. On note aussi que la durée de « floating » est plus faible pour les éléments de type C que pour les éléments de type B. Cet avantage peut être attribué à la présence de LiPO₂F₂ dans l'électrolyte.

a-2) Les éléments symétriques de type D et E ont été soumis à un cyclage à 60°C comprenant les étapes suivantes :
- 1 cycle au régime de 0,1 mA/cm²
- 2 cycles au régime de 0,2 mA/cm²
- 10 cycles au régime de 0,4 mA/cm²
- des cycles au régime de 1,0 mA/cm² jusqu'à observer une défaillance de l'élément.

La variation de la tension au cours du cyclage est mesurée.

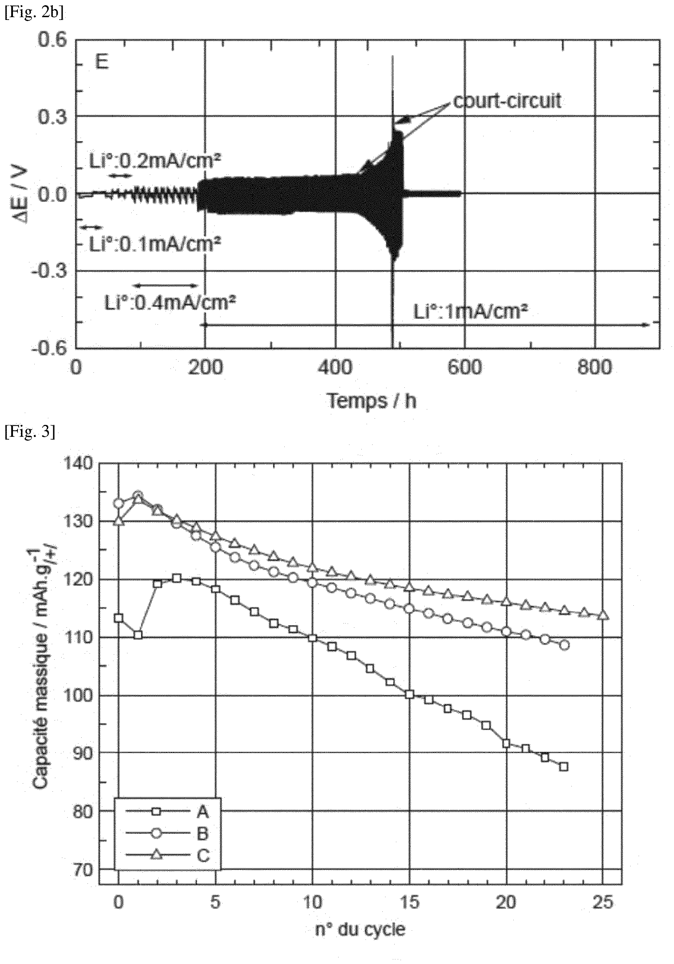

La figure 2a montre des variations importantes de la tension à partir de 200 heures de cyclage. Ceci témoigne d'une hausse significative de la résistance aux interfaces des deux électrodes. L'extraction et l'insertion du lithium se fait moins facilement entrainant une hausse de la résistance. Une mauvaise passivation du lithium des électrodes des éléments de type D peut expliquer la mauvaise extraction/insertion du lithium.

En revanche, la défaillance des éléments de type E ne se produit qu'à partir de la 450^{ème} et de la 500^{ème} heure. La durée de vie des éléments de type E est donc doublée par rapport à celle des éléments de type D. Ces essais confirment le bénéfice obtenu par le remplacement des carbonates non fluorés EC et EMC par le mélange ternaire fluoré F1EC : F3EA : HFMP.

a-3) Après formation, les éléments de type A, B et C ont subi un cyclage à la température de 60°C à un régime de C/10. Chaque charge consiste en une première étape de charge à courant constant de C/10 jusqu'à une tension de 4,9 V suivie d'une seconde étape de charge à tension constante de 4,9 V et arrêt de la charge soit lorsque le courant de charge devient inférieur à C/100, soit lorsque la durée nécessaire pour que le courant de charge devienne inférieur à C/100 dépasse 1 h. La figure 3 représente la variation de la capacité massique des éléments de type A, B et C au cours de ce cyclage. On constate que la décroissance la plus rapide de la capacité massique est obtenue avec les éléments de type A. Les performances des éléments de type B et C se maintiennent davantage au cours du cyclage. La perte de capacité après 25 cycles est d'environ 15% pour les éléments de type B et C alors qu'elle est d'environ 30% pour les éléments de type A. On constate de plus que globalement sur l'ensemble du cyclage, la capacité massique des éléments de type C est supérieure à celle des éléments de type B, qui elle-même est supérieure à celle des éléments de type A. Enfin, on peut noter que l'addition de seulement 0,1% de LiPO₂F₂ dans les éléments de type C suffit pour observer une amélioration significative de la capacité massique et de la durée de vie de l'élément.

### b) Effet du remplacement des carbonates non fluorés de l'électrolyte par un mélange ternaire fluoré selon l'invention sur la résistance à l'inflammation de l'électrolyte :

Des bandelettes de papier céramique ont été imprégnées de l'électrolyte des éléments de type D et E puis ont été enflammées. Des photographies de l'aspect des bandelettes ont été prises à trois secondes, six secondes et neuf secondes après les avoir enflammées. Ce test permet d'évaluer le caractère inflammable des compositions d'électrolytes car le papier céramique seul est ignifugé. Les photographies de la rangée du haut correspondant à un électrolyte EC : EMC montrent une inflammation de la bandelette. Les photographies de la rangée du bas correspondant à un électrolyte ternaire F1EC : F3EA : HFMP montrent une extinction de la flamme six secondes après avoir enflammé la bandelette. Cet essai met en évidence le caractère ininflammable de la composition ternaire fluorée.

### c) Influence de la structure cristallographique (état ordonné/désordonné) et du remplacement de HFMP par HFMFP sur la durée de vie et la polarisation de l'élément :

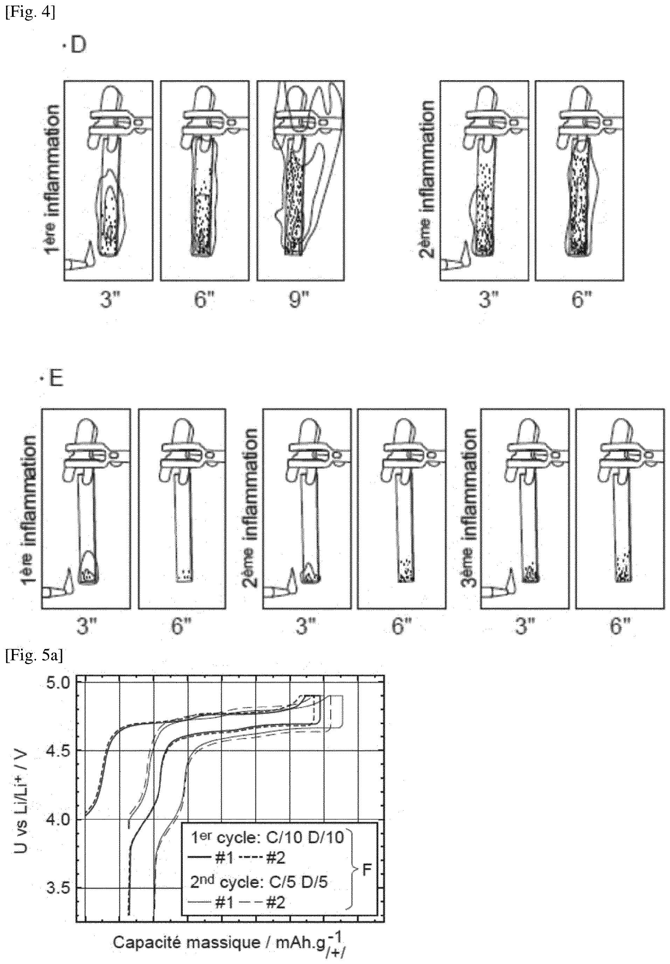

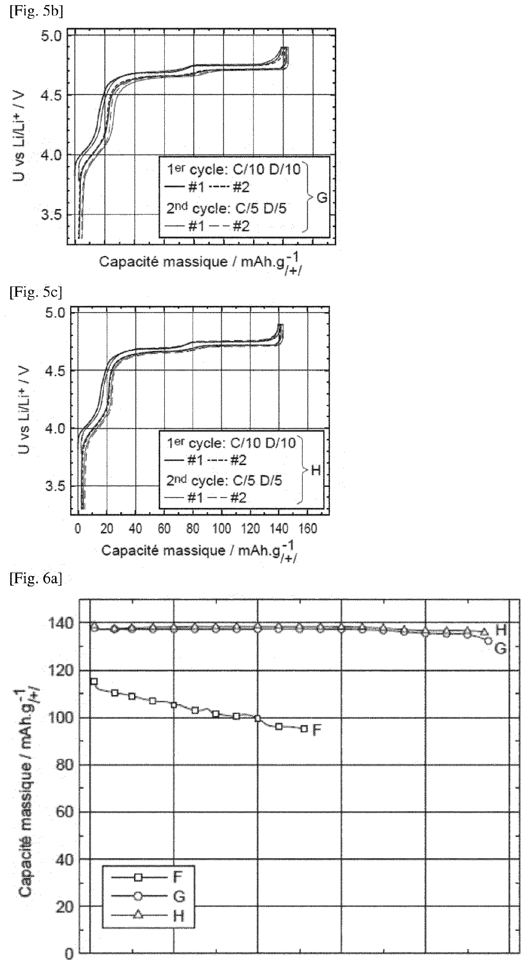

c-1) Des éléments de type F, G et H dont la matière active cathodique est constituée de LiNi_{0,5}Mn_{1,5}O₄ désordonné ont été préparés. Ils ont subi deux cycles de « formation » à la température de 25°C. Au cours du premier cycle, la charge consiste en une première étape de charge à courant constant de C/10 jusqu'à une tension de 4,9 V suivie d'une seconde étape de charge à tension constante de 4,9 V et arrêt de la charge soit lorsque le courant de charge devient inférieur à C/100, soit lorsque la durée nécessaire pour que le courant de charge devienne inférieur à C/100 dépasse 1 h. La décharge est effectuée au régime de C/10 jusqu'à une tension de coupure de 3,3 V La charge et la décharge du 2^{ème} cycle diffère de celles du 1^{er} cycle en ce que le régime est de C/5 au lieu de C/10. Les figures 5a, 5b et 5c représentent les variations de la tension des éléments F, G et H au cours de ces deux cycles de formation. Deux éléments par type F, G et H ont été testés.

Les éléments de type F comprenant un mélange de carbonates non-fluorés servent de référence. En comparant les courbes de tension des éléments de type G et H avec ceux de type F, on aboutit aux mêmes constatations que celles des essais de la figure 1, c'est-à-dire une réduction de la capacité massique irréversible, une réduction de la polarisation et une réduction du temps au cours duquel l'élément est exposé à une tension élevée. Le bénéfice observé pour les éléments de type C et G dont l'électrolyte contient HFMP est également observé pour les éléments de type H dont l'électrolyte contient HFMFP. La demanderesse est également d'avis que l'utilisation de LiNi_{0,5}Mn_{1,5}O₄ désordonné permet de réduire la polarisation de l'élément en comparaison avec un élément dont la cathode contiendrait LiNi_{0,5}Mn_{1,5}O₄ ordonné. L'utilisation de LiNi_{0,5}Mn_{1,5}O₄ désordonné convient donc bien à la fabrication d'éléments typés « puissance », c'est-à-dire pour lesquels on privilégie les performances en puissance sans nécessairement se fixer de critère sur la quantité d'énergie emmagasinée par l'élément. Les éléments typés « puissance » sont en effet généralement caractérisés par une faible résistance interne.

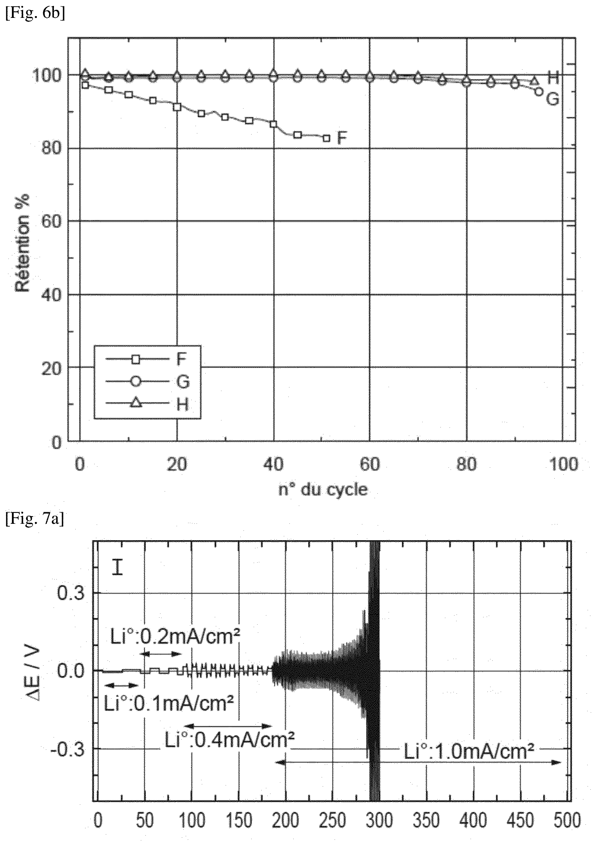

c-2) Les éléments de type F, G et H ont subi un cyclage à la température de 25°C au régime de C/5. L'étape de charge à tension constante de 4,9 V est arrêtée lorsque la durée de floating dépasse 30 minutes. Les résultats du cyclage sont représentés Figure 6a et 6b. On constate d'une part sur la figure 6a que le remplacement des carbonates par le solvant fluoré selon l'invention permet de réduire de manière très significative la perte de capacité en cyclage. En effet, la capacité massique des éléments de type G et H n'a quasiment pas décru après 50 cycles alors que celle de l'élément F a décru d'environ 20 % après 50 cycles. On constate d'autre part que dès le début du cyclage, la valeur de la capacité massique des éléments de type G et H est supérieure à celle des éléments de type F d'environ 30 mAh/g. Les performances obtenues sur les éléments de type G sont similaires à celles obtenues sur les éléments de type H, ce qui indique que HFMP et HFMFP sont équivalents du point de vue des performances dans un élément de type LiNi_{0,5}Mn_{1,5}O₄ / Li⁽⁰⁾. Les mêmes conclusions peuvent être tirées de la figure 6b qui représente le pourcentage de rétention de capacité des éléments par rapport à leur capacité en début de cyclage en fonction du nombre de cycles.

c-3) Les éléments symétriques de type I, J et K ont été soumis à un cyclage à 60°C comprenant les étapes suivantes :
- 1 cycle au régime de 0,1 mA/cm²
- 2 cycles au régime de 0,2 mA/cm²
- 10 cycles au régime de 0,4 mA/cm²
- des cycles au régime de 1,0 mA/cm² jusqu'à observer une défaillance de l'élément.

La variation de la tension au cours du cyclage est mesurée.

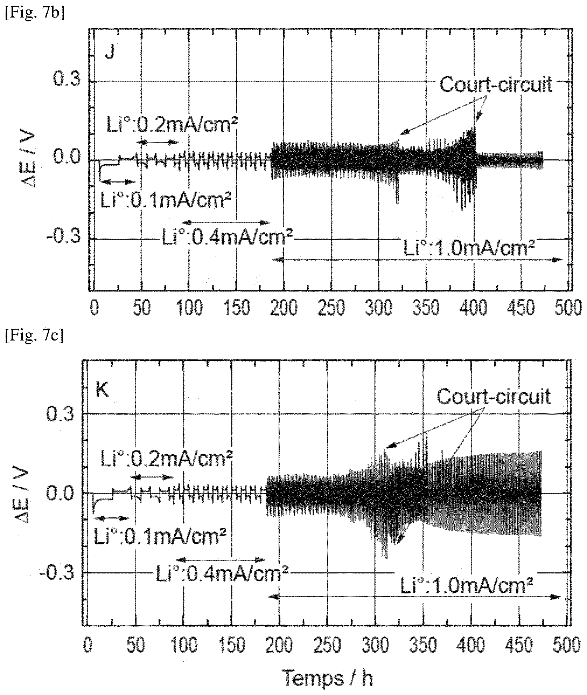

La figure 7a montre une défaillance de l'élément I après 300 heures de cyclage. En revanche, la défaillance des éléments de type J et K ne se produit qu'après celle de l'élément I. Ces essais confirment le bénéfice obtenu grâce au remplacement des carbonates non fluorés EC et EMC par le mélange ternaire fluoré F1EC : F3EA : HFMFP.

## Revendications

1. Elément électrochimique comprenant :
- au moins une anode comprenant du lithium métallique ou un alliage de lithium ou au moins une anode comprenant un collecteur de courant recouvert au moins partiellement de lithium métallique déposé après au moins une charge de l'élément, l'élément ne contenant pas de lithium métallique lors de sa fabrication,
- au moins une cathode,
- une composition d'électrolyte liquide ou gélifiée comprenant :
a) un solvant comprenant :
i) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
ii) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA),
b) au moins un sel dont le cation est le cation lithium,
c) du difluorophosphate de lithium LiPO₂F₂, et éventuellement un ou plusieurs additifs choisis dans le groupe consistant en un phosphate fluoré de lithium, un phosphate alkylé de lithium, les atomes d'hydrogène du ou des groupe(s) alkyle(s) étant éventuellement partiellement ou totalement substitué(s) par du fluor, un sulfate éventuellement partiellement ou totalement substitué par du fluor, un sulfonate éventuellement partiellement ou totalement substitué par du fluor, un sulfoxyde éventuellement partiellement ou totalement substitué par du fluor, une sulfone éventuellement partiellement ou totalement substituée par du fluor, un carbonate cyclique comportant au moins une insaturation et un mélange de ceux-ci,
la quantité de difluorophosphate de lithium représentant de 0,05 à 5% de la masse de l'ensemble constitué par le solvant et ledit au moins un sel de lithium dissous,
la quantité totale de difluorophosphate de lithium et du ou des additifs représentant au plus 10 % de la masse de l'ensemble constitué par le solvant et ledit au moins un sel de lithium dissous.

2. Elément selon la revendication 1, dans lequel l'anode comprend du lithium métallique ou un alliage de lithium.

3. Elément selon la revendication 1 ou 2 dans lequel l'additif est choisi dans le groupe consistant en le sulfate d'éthylène ESA, le carbonate de vinyle VC et un mélange de ceux-ci.

4. Elément selon l'une des revendications 1 à 3, dans lequel le pourcentage massique de LiPO₂F₂ va de 0,05 à 2 %, de préférence de 0,1 à 1 % de la masse de l'ensemble constitué par le solvant et ledit au moins un sel

5. Elément selon la revendication 4, dans lequel le sel de lithium est l'hexafluorophosphate de lithium LiPF₆.

6. Elément selon l'une des revendications précédentes, dans lequel le solvant est exempt de carbonate non fluoré.

7. Elément selon l'une des revendications 1 à 6, dans lequel la cathode comprend une matière active cathodique fonctionnant à un potentiel supérieur à 4,5 V par rapport au couple Li⁺/Li.

8. Elément selon la revendication 7, dans lequel la matière active cathodique a pour formule LiₓMn_{2-y-z}M'_{y}M"_{z}O₄ (LMO), où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre, et 1≤x≤1,4 ; 0≤y≤0,6 ; 0≤z≤0,2.

9. Elément selon la revendication 8, dans lequel la matière active cathodique présente une structure cristalline désordonnée.

10. Elément selon l'une des revendications 7 et 8, dans lequel la cathode comprend un mélange de deux matières actives cathodiques,
la première présentant une structure cristalline désordonnée, la seconde présentant une structure cristalline ordonnée.

11. Elément selon l'une des revendications 8 à 10, dans lequel la composition d'électrolyte comprend :
- un solvant comprenant un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA) ;
- de l'hexafluorophosphate de lithium LiPF₆ comme sel ;
- du difluorophosphate de lithium LiPO₂F₂ comme additif.

12. Elément selon l'une des revendications précédentes, dans lequel le 1,1,1,3,3,3-hexafluoro-2-méthoxypropane (HFMP) et/ou le 1,1,1,3,3,3 -hexafluoro-2-(fluorométhoxy)propane (HFMFP) représente de 10 à 50 % du volume de solvant ou de 15 à 40 % du volume de solvant ou de 20 à 30 % du volume de solvant.

13. Elément selon la revendication 11, dans lequel :
- le 1,1,1,3,3,3-hexafluoro-2-méthoxypropane (HFMP) et/ou le 1,1,1,3,3,3-hexafluoro-2-(fluorométhoxy)propane (HFMFP) représente de 20 à 30 % du volume de solvant,
- le monofluorocarbonate d'éthylène (F1EC) représente de 15 à 40 % du volume de solvant,
- l'acétate de 2,2,2-trifluoroéthyle (F3EA) représente de 30 à 50 % du volume de solvant.

14. Utilisation de l'élément selon l'une des revendications précédentes en cyclage.

15. Utilisation selon la revendication 14, dans laquelle le cyclage est effectué à une température supérieure à 25°C

## Patentansprüche

1. Elektrochemische Zelle, umfassend:
- mindestens eine Anode, die metallisches Lithium oder eine Lithiumlegierung umfasst, oder mindestens eine Anode, die einen Stromkollektor umfasst, der mindestens teilweise mit metallischem Lithium bedeckt ist, das nach mindestens einer Ladung der Zelle abgeschieden wurde, wobei die Zelle bei ihrer Herstellung kein metallisches Lithium enthält,
- mindestens eine Kathode,
- eine flüssige oder gelierte Elektrolytzusammensetzung, umfassend:
a) ein Lösungsmittel, umfassend:
i) oder ein Gemisch aus 1,11,3,3,3-Hexafluor-2-methoxypropan (HFMP) und/oder 1,1,1,3,3,3-Hexafluor-2-(fluormethoxy)propan (HFMFP), Ethylenmonofluorcarbonat (F1EC) und 2,2,2-Trifluorethylmethylcarbonat (F3EMC),
ii) oder ein Gemisch aus 1,1,1,3,3,3-Hexafluor-2-methoxypropan (HFMP) und/oder 1,1,1,3,3,3-Hexafluor-2-(fluormethoxy)propan (HFMFP), Ethylenmonofluorcarbonat (F1EC) und 2,2,2-Trifluorethylacetat (F3EA),
b) mindestens ein Salz, dessen Kation das Lithiumkation ist,
c) Lithiumdifluorophosphat LiPOzFz und gegebenenfalls einen oder mehrere Zusatzstoffe, ausgewählt aus der Gruppe, bestehend aus einem fluorierten Lithiumphosphat, einem alkylierten Lithiumphosphat, wobei die Wasserstoffatome der Alkylgruppe(n) gegebenenfalls teilweise oder vollständig mit Fluor substituiert sind, einem gegebenenfalls teilweise oder vollständig mit Fluor substituierten Sulfat, ein gegebenenfalls teilweise oder vollständig mit Fluor substituiertes Sulfonat, ein gegebenenfalls teilweise oder vollständig mit Fluor substituiertes Sulfoxid, ein gegebenenfalls teilweise oder vollständig mit Fluor substituiertes Sulfon, ein cyclisches Carbonat mit mindestens einer ungesättigten Bindung und ein Gemisch davon,
wobei die Menge an Lithiumdifluorophosphat 0,05 bis 5 % der Masse der Gesamtheit aus dem Lösungsmittel und dem mindestens einen gelösten Lithiumsalz ausmacht,
wobei die Gesamtmenge an Lithiumdifluorophosphat und dem/den Zusatzstoff(en) höchstens 10 % der Masse der Kombination aus dem Lösungsmittel und dem mindestens einen gelösten Lithiumsalz ausmacht.

2. Zelle nach Anspruch 1, wobei die Anode metallisches Lithium oder eine Lithiumlegierung umfasst.

3. Zelle nach Anspruch 1 oder 2, wobei das Additiv ausgewählt ist aus der Gruppe bestehend aus Ethylensulfat ESA, Vinylcarbonat VC und einer Mischung aus diesen.

4. Zelle nach einem der Ansprüche 1 bis 3, wobei der Massenprozentsatz von LiPOzFz 0,05 bis 2 %, vorzugsweise 0,1 bis 1 %, der Masse der Gesamtheit aus dem Lösungsmittel und dem genannten mindestens einen Salz.

5. Zelle nach Anspruch 4, wobei das Lithiumsalz Lithiumhexafluorophosphat LiPF₆ ist.

6. Zelle nach einem der vorhergehenden Ansprüche, wobei das Lösungsmittel frei von nicht-fluoriertem Carbonat ist.

7. Zelle nach einem der Ansprüche 1 bis 6, wobei die Kathode ein kathodisch aktives Material umfasst, das bei einem Potential von mehr als 4,5 V gegenüber dem Li+/Li-Paar arbeitet.

8. Zelle nach Anspruch 7, wobei das kathodisch aktive Material die Formel LiₓMn_{2-y-z}M'_{y}M"_{z}O₄ (LMO) hat, wobei M' und M" ausgewählt sind aus der Gruppe bestehend aus B, Mg, Al, Si, Ca, Ti, V, Cr, Fe, Co, Ni, Cu, Zn, Y, Zr, Nb und Mo; wobei M' und M" voneinander verschieden sind, und 1≤x≤1,4; 0≤y≤0,6; 0≤z≤0,2.

9. Zelle nach Anspruch 8, wobei das kathodisch aktive Material eine ungeordnete Kristallstruktur aufweist.

10. Zelle nach einem der Ansprüche 7 oder 8, wobei die Kathode eine Mischung aus zwei kathodisch aktiven Materialien umfasst,
wobei das erste eine ungeordnete Kristallstruktur aufweist und das zweite eine geordnete Kristallstruktur aufweist.

11. Zelle nach einem der Ansprüche 8 bis 10, wobei die Elektrolytzusammensetzung umfasst:
- ein Lösungsmittel, das ein Gemisch aus 1,1,1,3,3,3-Hexafluor-2-methoxypropan (HFMP) und/oder 1,1,1,3,3,3-Hexafluor-2-(fluormethoxy)propan (HFMFP), Ethylenmonofluorcarbonat (F1EC) und 2,2,2-Trifluorethylacetat (F3EA);
- von Lithiumhexafluorophosphat LiPFsals Salz;
- Lithiumdifluorophosphat LiPOzFz; als Zusatzstoff.

12. Zelle nach einem der vorhergehenden Ansprüche, wobei 1,1,1,3,3,3-Hexafluor-2-methoxypropan (HFMP) und/oder 1,1,1,3,3,3-Hexafluor-2-(fluoromethoxy)propan (HFMFP) 10 bis 50 % des Lösungsmittelvolumens oder 15 bis 40 % des Lösungsmittelvolumens oder 20 bis 30 % des Lösungsmittelvolumens ausmacht.

13. Zelle nach Anspruch 11, wobei:
- 1,1,1,3,3,3-Hexafluor-2-methoxypropan (HFMP) und/oder 1,1,1,3,3,3-Hexafluor-2-(fluormethoxy)propan (HFMFP) 20 bis 30 % des Lösungsmittelvolumens ausmachen,
- Ethylenmonofluorcarbonat (F1EC) 15 bis 40 % des Lösungsmittelvolumens ausmacht,
- 2,2,2-Trifluorethylacetat (F3EA) 30 bis 50 % des Lösungsmittelvolumens ausmacht.

14. Verwendung der Zelle nach einem der vorhergehenden Ansprüche zum Zyklieren.

15. Verwendung nach Anspruch 14, wobei das Zyklieren bei einer Temperatur von mehr als 25°C durchgeführt wird.

## Claims

1. An electrochemical cell comprising:
- at least one anode comprising metallic lithium or a lithium alloy or at least one anode comprising a current collector at least partially covered with metallic lithium deposited after at least one charge of the cell, the cell not containing metallic lithium at the time of its manufacture,
- at least one cathode,
- a liquid or gelled electrolyte composition comprising:
a) a solvent comprising:
i) either a mixture of 1,1,1,3,3,3-hexafluoro-2-methoxypropane (HFMP) and/or 1, 1,1,3,3,3-hexafluoro-2-(fluoromethoxy)propane (HFMFP), ethylene monofluorocarbonate (F1EC) and 2,2,2-trifluoroethyl methyl carbonate (F3EMC),
ii) or a mixture of 1,1,1,3,3,3-hexafluoro-2-methoxypropane (HFMP) and/or 1,1,1,3,3,3-hexafluoro-2-(fluoromethoxy)propane (HFMFP), ethylene monofluorocarbonate (F1EC) and 2,2,2-trifluoroethyl acetate (F3EA),
b) at least one salt whose cation is the lithium cation,
c) lithium difluorophosphate LiPO₂F₂, and optionally one or more additives selected from the group consisting of a lithium fluorinated phosphate, an alkylated lithium phosphate, the hydrogen atoms of the alkyl group(s) optionally being partially or totally substituted by fluorine, a sulfate optionally partially or totally substituted by fluorine, a sulfonate optionally partially or totally substituted by fluorine, a sulfoxide optionally partially or totally substituted by fluorine, a sulfone optionally partially or totally substituted by fluorine, a cyclic carbonate comprising at least one unsaturation and a mixture thereof,
the amount of lithium difluorophosphate representing from 0.05 to 5% of the mass of the combination made up of the solvent and said at least one dissolved lithium salt,
the total amount of lithium difluorophosphate and of the additive(s) representing at most 10% of the mass of the combination made up of the solvent and said at least one dissolved lithium salt.

2. The cell according to claim 1, wherein the anode comprises metallic lithium or a lithium alloy.

3. The cell according to claim 1 or 2 wherein the additive is selected from the group consisting of ethylene sulfate ESA, vinyl carbonate VC and a mixture thereof.

4. The cell according to one of claims 1 to 3, wherein the mass percentage of LiPO₂F₂ ranges from 0.05 to 2%, preferably from 0.1 to 1% of the mass of the combination made up of the solvent and said at least one salt.

5. The cell according to claim 4, wherein the lithium salt is lithium hexafluorophosphate LiPF₆.

6. The cell according to one of the preceding claims, wherein the solvent is free of non-fluorinated carbonate.

7. The cell according to one of claims 1 to 6, wherein the cathode comprises a cathodic active material operating at a potential greater than 4.5 V with respect to the Li⁺/Li couple.

8. The cell according to claim 7, wherein the cathodic active material has the formula LiₓMn_{2-y-z}M'_{y}M"_{z}O₄ (LMO), where M' and M" are selected from the group consisting of B, Mg, Al, Si, Ca, Ti, V, Cr, Fe, Co, Ni, Cu, Zn, Y, Zr, Nb and Mo; M' and M" being different from each other, and 1≤x≤1.4; 0≤y≤0.6; 0≤z≤0.2.

9. The cell according to claim 8, wherein the cathodic active material has a disordered crystalline structure.

10. The cell according to one of claims 7 and 8, wherein the cathode comprises a mixture of two cathodic active materials, the first having a disordered crystalline structure, the second having an ordered crystalline structure.

11. The cell according to one of claims 8 to 10, wherein the electrolyte composition comprises:
- a solvent comprising a mixture of 1,1,1,3,3,3-hexafluoro-2-methoxypropane (HFMP) and/or 1,1, 1,3,3,3-hexafluoro-2-(fluoromethoxy)propane (HFMFP), ethylene monofluorocarbonate (F1EC) and 2,2,2-trifluoroethyl acetate (F3EA);
- lithium hexafluorophosphate LiPF₆ as salt;
- lithium difluorophosphate LiPO₂F₂ as an additive.

12. The cell according to one of the preceding claims, wherein 1,1,1,3,3,3-hexafluoro-2-methoxypropane (HFMP) and/or 1,1,1,3,3,3-hexafluoro-2-(fluoromethoxy)propane (HFMFP) represents 10 to 50% of the volume of solvent or 15 to 40% of the volume of solvent or 20 to 30% of the volume of solvent.

13. The cell according to claim 11, wherein:
- 1,1,1,3,3,3-hexafluoro-2-methoxypropane (HFMP) and/or 1,1,1,3,3,3-hexafluoro-2-(fluoromethoxy)propane (HFMFP) represents 20 to 30% of the volume of solvent,
- ethylene monofluorocarbonate (F1EC) represents 15 to 40% of the volume of solvent,
- 2,2,2-trifluoroethyl acetate (F3EA) represents 30 to 50% of the volume of solvent.

14. A use of the cell according to one of the preceding claims in cycling.

15. The use according to claim 14, wherein the cycling is carried out at a temperature above 25°C.
